Europäisches Patentamt

European Patent Office

Office européen des brevets

(19)

(11) **EP 1 421 826 B1**

(12) **FASCICULE DE BREVET EUROPEEN**

(45) Date de publication et mention
de la délivrance du brevet:
**16.11.2005 Bulletin 2005/46**

(21) Numéro de dépôt: **02774885.4**

(22) Date de dépôt: **27.08.2002**

(51) Int Cl.$^7$: **H05B 7/00**

(86) Numéro de dépôt international:
**PCT/FR2002/002940**

(87) Numéro de publication internationale:
**WO 2003/019986 (06.03.2003 Gazette 2003/10)**

(54) **DISPOSITIF D'ALIMENTATION EN COURANT CONTINU POUR FOUR A ARC**

GLEICHSTROMVERSORGUNGSEINRICHTUNG FÜR EINEN ELEKTROLICHTBOGENOFEN

DIRECT CURRENT SUPPLY DEVICE FOR ARC FURNACE

(84) Etats contractants désignés:
**AT BE BG CH CY CZ DE DK EE ES FI FR GB GR
IE IT LI LU MC NL PT SE SK TR**

(30) Priorité: **29.08.2001 FR 0111216**

(43) Date de publication de la demande:
**26.05.2004 Bulletin 2004/22**

(73) Titulaires:
  • **Electricité de France**
    **75008 Paris (FR)**
  • **CENTRE NATIONAL DE
    LA RECHERCHE SCIENTIFIQUE (CNRS)**
    **75794 Paris Cedex 16 (FR)**

(72) Inventeurs:
  • **NUNS, Jacques**
    **F-77250 Ecuelles (FR)**
  • **BAS, Cyrille**
    **F-31000 Toulouse (FR)**
  • **FOCH, Henri**
    **F-31200 Toulouse (FR)**
  • **LADOUX, Philippe**
    **F-31280 Dremil-Lafage (FR)**

(74) Mandataire: **Poulin, Gérard et al
Brevatome
3, rue du Docteur Lancereaux
75008 Paris (FR)**

(56) Documents cités:
    DE-A- 19 920 049          US-A- 3 381 171
    US-A- 5 638 263

  • ROUX J A ET AL: "A series resonant converter
    for arc striking applications" POWER
    ELECTRONICS SPECIALISTS CONFERENCE,
    1995. PESC '95 RECORD., 26TH ANNUAL IEEE
    ATLANTA, GA, USA 18-22 JUNE 1995, NEW
    YORK, NY, USA,IEEE, US, 18 juin 1995
    (1995-06-18), pages 723-728, XP010150633
    ISBN: 0-7803-2730-6

## Description

### Domaine technique et art antérieur

L'invention concerne un dispositif d'alimentation en courant continu pour four à arc.

Les fours à arc sont utilisés en sidérurgie pour la production d'acier à partir de ferrailles de récupération ou de minerais pré-réduits.

Les fours à arc sont alimentés soit en courant alternatif soit en courant continu. La technologie à courant alternatif est apparue avec les premiers fours à arc et la technologie à courant continu a vu le jour afin de pallier les inconvénients majeurs des alimentations à courant alternatif à savoir, une consommation importante d'électrodes et des perturbations du réseau électrique.

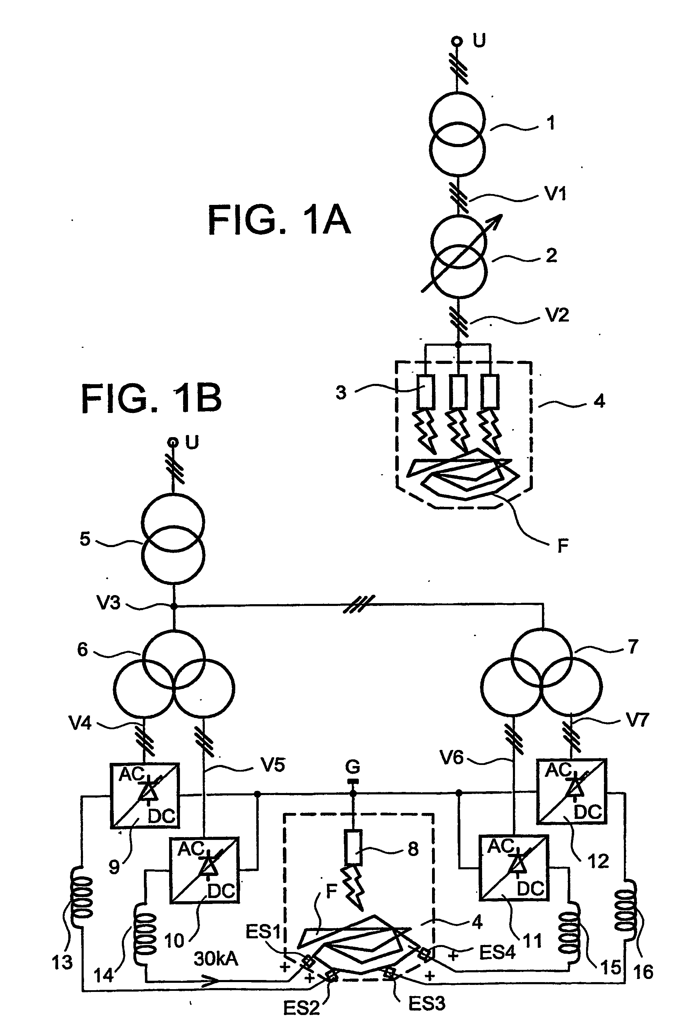

Les figure 1A et 1B représentent respectivement un exemple d'alimentation à courant alternatif et un exemple d'alimentation à courant continu selon l'art antérieur.

L'alimentation à courant alternatif (figure 1A) comprend un transformateur 1, un régleur en charge 2 et un ensemble d'électrodes mobiles 3. Les électrodes 3 sont placées à l'intérieur d'un creuset 4 qui contient des morceaux de ferraille F qui doivent être fondus. Une haute tension U, par exemple égale à 220kV efficaces, est transformée en une tension intermédiaire V1, par exemple égale à 36kV efficaces, par le transformateur 1 et la tension intermédiaire V1 est transformée en une tension V2, par exemple égale à 1kV efficace, appliquée sur les électrodes 3.

L'alimentation à courant continu (figure 1B) comprend trois transformateurs 5, 6, 7, quatre redresseurs à thyristors 9, 10, 11, 12, une électrode mobile 8 et quatre électrodes de sole ES1, ES2, ES3, ES4. Un premier transformateur 5 transforme une haute tension U en une première tension intermédiaire V3, par exemple égale à 36kV efficaces. Les transformateurs 6 et 7 comprennent, chacun, deux secondaires. Le transformateur 6 (resp. 7) permet alors de transformer la tension intermédiaire V3 en deux tensions V4 et V5 (resp. V6 et V7) toutes deux égales, par exemple, à 640V efficaces. Les tensions V4, V5, V6, V7 sont respectivement appliquées aux redresseurs à thyristors 9, 10, 11, 12. Les tensions continues délivrées aux bornes des redresseurs à thyristors 9, 10, 11, 12 sont appliquées, par l'intermédiaire des bobines respectives 13, 14, 15, 16, entre l'électrode mobile 8 et les électrodes de sole ES1, ES2, ES3, ES4 du creuset 4 qui contient la ferraille F.

Pour les deux types d'alimentation, c'est la régulation de position des (ou de 1') électrode(s) mobile(s) qui permet de contrôler la tension d'arc. La régulation de courant d'arc est réalisée par l'intermédiaire du régleur en charge pour les fours à arc à courant alternatif et par les redresseurs à thyristors pour les fours à arc à courant continu.

Les fours à arc à courant continu sont à l'origine de plusieurs types de perturbations. Ces perturbations concernent tant le fonctionnement du four à arc lui-même que le réseau électrique.

Dans un premier temps seront décrites les perturbations qui concernent le fonctionnement du four à arc.

La régulation des redresseurs à thyristors permet d'obtenir un courant d'arc sensiblement constant alors que la nature de la charge veut que la tension d'arc varie fortement du fait des variations de la longueur de l'arc. Ceci a pour conséquence une fluctuation de la puissance fournie à l'arc. Deux phénomènes sont alors particulièrement gênants : les extinctions d'arc et les courts-circuits.

Une fois le creuset du four à arc rempli par des ferrailles, la phase de fusion commence. Pour amorcer l'arc, les consignes des régulateurs de courant et de tension sont fixées à des valeurs en deçà du point nominal. Lorsque l'électrode commence à descendre dans le creuset, l'arc s'amorce entre l'électrode et le morceau de ferraille le plus proche de celle-ci. Ensuite, la ferraille commence à fondre. Si celle-ci chute, la tension d'arc augmente du fait de l'accroissement de la distance entre l'électrode et la ferraille. Si la longueur d'arc devient telle que la tension d'arc dépasse la tension maximale que peut délivrer le convertisseur, l'arc s'éteint. Ce phénomène est accompagné de l'annulation des courants prélevés sur le réseau, ce qui entraîne une variation brusque des puissances active et réactive. Généralement, la phase de fusion est réalisée sous tension et courant réduits afin de limiter les extinctions de l'arc.

La chute de morceaux de ferraille à l'intérieur du four peut aussi entraîner une mise en court-circuit entre l'électrode mobile et la ferraille. Lors de ces mises en court-circuit, le courant d'arc reste constant et la tension d'arc est minimale. La puissance absorbée sur le réseau tend alors vers zéro. Le convertisseur étant commandé en contrôle de phase, il s'ensuit que la puissance réactive est maximale.

Les inconvénients vis-à-vis du réseau vont maintenant être décrits.

Un four à arc alimenté en courant alternatif peut être considéré comme une source de courant harmonique. Le spectre de ce courant comprend, d'une part, un spectre de raies dû à la non-linéarité de la caractéristique de l'arc électrique et d'autre part, un spectre continu dû à l'instabilité de l'arc électrique. Ainsi, un four à arc à courant alternatif peut-il générer des harmoniques de rang pair, impair et même non entier avec, cependant, une prédominance des rangs impairs. Toutefois, en général, les harmoniques ne sont significatifs que pour les rangs compris entre 1 et 15 et leur amplitude peut atteindre 10% du fondamental.

Dans le cas des fours à arc à courant continu alimentés par des ponts redresseurs à thyristors, les harmoniques sont générés par les convertisseurs statiques. Pour les redresseurs à thyristors, les rangs h des courants harmoniques prépondérants, également appelés harmoniques caractéristiques, s'expriment par la relation :

$$h = k \, p \pm 1$$

avec k = 1, ...., n et p l'indice de pulsation du convertisseur

Cependant, en pratique, des harmoniques non caractéristiques apparaissent consécutivement aux imprécisions des angles de retard à l'amorçage des thyristors, aux déséquilibres des tensions d'alimentation... En général, ces harmoniques non caractéristiques ne sont significatifs que pour les rangs compris entre 1 et 10 et restent inférieurs à 1% du courant fondamental.

Les interharmoniques sont situés à des fréquences qui ne correspondent pas à des multiples entiers de la fréquence du fondamental. Ils peuvent apparaître sous forme d'un spectre continu ou d'un spectre discret. Ainsi, dans le four à arc à courant alternatif, apparaissent-ils sous forme d'un spectre continu qui a pour origine les instabilités de l'arc. Pour un four à arc à courant continu, les interharmoniques sont de faible amplitude.

Un autre problème des fours à arc concerne le phénomène connu sous le terme anglo-saxon de « flicker ». Le « flicker » se traduit par un papillotement de la lumière émise par les lampes, ce qui provoque une fatigue physique et psychique pour les usagers de l'éclairage raccordés à proximité de la charge perturbatrice.

C'est lors de la phase de fusion que l'arc pose le plus de problèmes. En effet, durant cette phase, la charge métallique perturbe le fonctionnement du four par ses mouvements et son hétérogénéité physique. Cela se traduit par des variations d'intensité, des courts-circuits, voire un arrêt transitoire du fonctionnement. Du fait du caractère aléatoire de ces phénomènes liés à la nature de la charge, le four engendre des variations erratiques de la tension d'arc et donc des puissances actives et réactives absorbées sur le réseau.

Ce sont les fluctuations de tension du réseau provoquées par les variations de charges mentionnées ci-dessus qui provoquent le phénomène de « flicker ».

Ces fluctuations de tension en ligne sont occasionnées par les résistances et les inductances parasites du réseau triphasé. En forte puissance, les chutes de tensions inductives sont prédominantes devant les chutes de tension résistives. C'est donc, en priorité, sur la variation de puissance réactive qu'il faut agir pour réduire le « flicker ».

Les alimentations à courant alternatif conduisent à une variation de puissance réactive deux fois plus importante que dans le cas du courant continu. Le « flicker » est donc plus important dans le cas du courant alternatif que dans le cas du courant continu.

Selon l'art connu, deux techniques sont utilisées pour réduire les variations de puissance réactive.

Une première technique utilise un compensateur statique de puissance réactive SVC (SVC pour « Static Var Compensator »). De façon générale, un compensateur SVC comprend une batterie fixe de condensateurs montés en dérivation et un dispositif de réglage électronique, appelé absorbeur, constitué d'un assemblage triangle d'inductances connectées en série avec deux thyristors montés tête-bêche. Le SVC permet de réguler la puissance réactive par action sur l'angle de commande des thyristors de l'absorbeur.

Une deuxième technique utilise des ponts de Graëtz à thyristors avec diodes de roues libres décalées ou avec des commandes particulières. Le degré de liberté supplémentaire apporté par ces convertisseurs est utilisé pour réduire les variations de puissance réactive (cf. le brevet français publié sous le N°2 704 709 et intitulé « *Dispositif convertisseur de puissance pour l'alimentation en courant continu d'un four électrique à arc* »).

La tension d'arc fluctue beaucoup et constitue une perturbation pour la régulation de courant d'arc. Ces fluctuations ont plusieurs origines : les chutes de morceaux de ferraille dans le four, les injections de gaz, la température du four, les interactions entre l'arc et la géométrie du bain d'acier, etc..

La régulation des redresseurs à thyristors n'est pas suffisamment rapide pour suivre les évolutions de la tension d'arc qui est vue comme une perturbation. Il en résulte des pertes de contrôle du convertisseur et une ondulation de courant importante. La technique couramment employée pour éliminer ou amoindrir ce phénomène consiste à ralentir l'évolution du courant d'arc en utilisant une valeur importante pour l'inductance de lissage du redresseur. Les valeurs usuelles sont de 250 μH soit, pour un four à arc 4x30kA, une énergie totale stockée dans les inductances de 450 kJ. Certains constructeurs vont jusqu'à 1 mH soit une énergie stockée de 1,8 MJ.

Il faut respecter une certaine adéquation entre la bande passante du convertisseur, la valeur de l'inductance de lissage et la dynamique de la tension d'arc. La bande passante d'un redresseur à thyristors est limitée par la fréquence du réseau. L'inductance de forte valeur permet de ralentir les évolutions du courant qui ont pour origine les fluctuations de tension. Il est ainsi possible de conserver le contrôle du redresseur malgré sa faible bande passante.

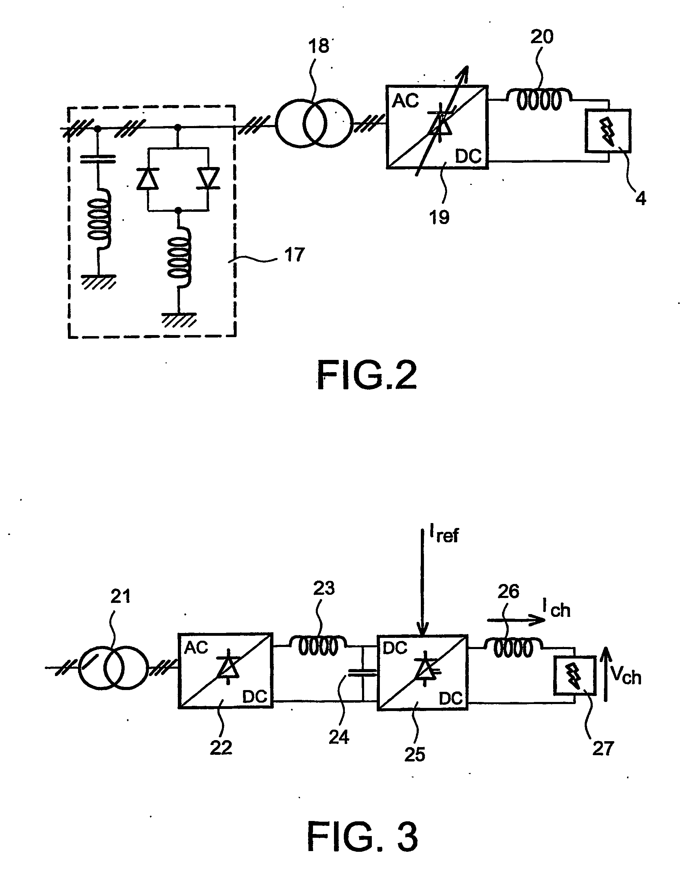

Un exemple d'alimentation comprenant des moyens pour adapter au réseau un convertisseur alternatif/continu selon l'art antérieur est représenté en figure 2.

L'alimentation représentée en figure 2 comprend un transformateur 18, un convertisseur alternatif/continu 19 et une self-inductance 20. Une structure 17 composée de filtres et d'un compensateur statique de puissance réactive est intercalée entre le réseau et le transformateur 18 de façon à réduire les harmoniques de courant et le flicker. Par ailleurs, la self-inductance 20 est surdimensionnée pour stabiliser l'arc. Ces moyens d'adaptation (structure 17, surdimensionnement de la self-inductance) grèvent fortement le coût de l'électronique du four à arc car ils représentent alors près de 50% du coût total de celle-ci.

## Exposé de l'invention

L'invention ne présente pas les inconvénients mentionnés ci-dessus.

En effet, l'invention concerne un dispositif d'alimentation en courant continu d'au moins une charge d'un four à arc, le dispositif comprenant au moins un transformateur alimenté à son primaire par un courant alternatif triphasé et délivrant sur au moins un secondaire un courant triphasé, un redresseur étant relié à chaque secondaire de transformateur de façon qu'en sortie du redresseur soient délivrés une tension et un courant redressés. Le dispositif comprend des moyens de conversion continu/continu, commandés par une consigne de courant, placés entre au moins une sortie d'au moins un redresseur et la charge de façon que le courant continu $I_{chj}$ d'alimentation de la charge soit donné par la formule :

$$I_{chj} = P_{ref} / V_{chj} \, ,$$

où $P_{ref}$ est une grandeur sensiblement constante et $V_{chj}$ est une valeur de tension mesurée aux bornes de la charge.

Le dispositif selon l'invention permet une diminution des perturbations sur le réseau d'alimentation par diminution du « flicker », minimisation du taux de distorsion harmonique des courants absorbés sur le réseau, augmentation du facteur de puissance, et augmentation de la productivité du four.

## Brève description des figures

D'autres caractéristiques et avantages de l'invention apparaîtront à la lumière d'un mode de réalisation préférentiel de l'invention décrit en références aux figures ci-annexées parmi lesquelles :

- les figures 1A et 1B représentent, respectivement, un exemple d'alimentation à courant alternatif et un exemple d'alimentation à courant continu selon l'art antérieur;
- la figure 2 représente un schéma de principe d'une alimentation à courant continu régulée selon l'art antérieur ;
- la figure 3 représente un schéma de principe d'une alimentation à courant continu selon l'invention ;
- la figure 4 représente un exemple d'alimentation à courant continu selon l'invention, sous la forme d'une structure matricielle ;
- la figure 5 représente un premier schéma de principe d'un circuit représenté en figure 4 ;
- les figures 6A et 6B représentent deux exemples de mise en oeuvre d'un circuit représenté en figure 5 ;
- la figure 7 représente un deuxième schéma de principe d'un circuit représenté en figure 4 ;
- les figures 8, 9A, 9B représentent trois exemples de mise en oeuvre d'un circuit représenté en figure 7 ;

Sur toutes les figures les mêmes repères désignent les mêmes éléments.

## Description détaillée de modes de mise en oeuvre de l'invention

Les figures 1A, 1B et 2 ont été décrites précédemment, il est donc inutile d'y revenir.

La figure 3 représente un schéma de principe d'une alimentation à courant continu selon l'invention.

L'alimentation comprend un transformateur 21, un redresseur à diodes 22, un filtre constitué, par exemple, d'une self-inductance 23 et d'un condensateur 24, un convertisseur continu/continu 25 et une self-inductance 26. La charge 27 qui est alimentée par l'alimentation est constituée d'une électrode mobile, d'une électrode de sole et d'un creuset rempli de ferrailles.

Le convertisseur continu-continu 25 est commandé par une consigne de courant $I_{ref}$ de façon à délivrer à la charge 27 une puissance sensiblement constante sur une large plage de variation de la tension $V_{ch}$ présente aux bornes de la charge. Le courant continu $I_{ch}$ qui parcourt la charge est sensiblement égal à la consigne $I_{ref}$. Le courant $I_{ch}$ est donné par l'équation :

$$I_{ch} = P_{ref}/V_{ch}$$

où $P_{ref}$ est une grandeur constante.

Les puissances active et réactive absorbées sur le réseau sont alors sensiblement constantes et le phénomène de « flicker » est en conséquence supprimé. L'utilisation d'un convertisseur continu/continu à MLI permet d'obtenir une bande passante élevée (MLI pour « Modulation de Largeur d'Impulsion »).

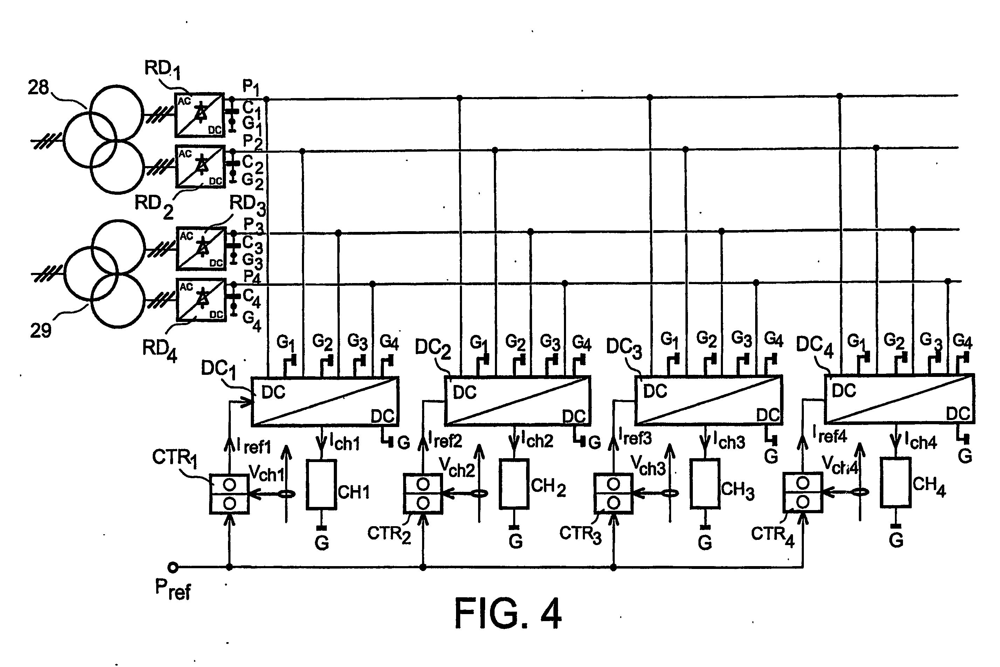

La figure 4 représente, à titre d'exemple non limitatif, une alimentation à courant continu à structure matricielle selon l'invention.

L'alimentation selon l'exemple de la figure 4 comprend deux transformateurs 28 et 29, quatre redresseurs $RD_i$ (i=1, 2, 3, 4), quatre convertisseurs continu/continu $DC_j$ (j=1, 2, 3, 4) et quatre circuits de commande de courant $CTR_j$. Chaque transformateur comprend un primaire et deux secondaires. Chaque secondaire est relié à un redresseur différent. La tension de sortie du redresseur $RD_i$ est prise entre des bornes $P_i$ et $G_i$. Un filtre constitué, par exemple, d'un condensateur $C_i$ est placé entre les bornes $P_i$ et $G_i$ de chaque redresseur.

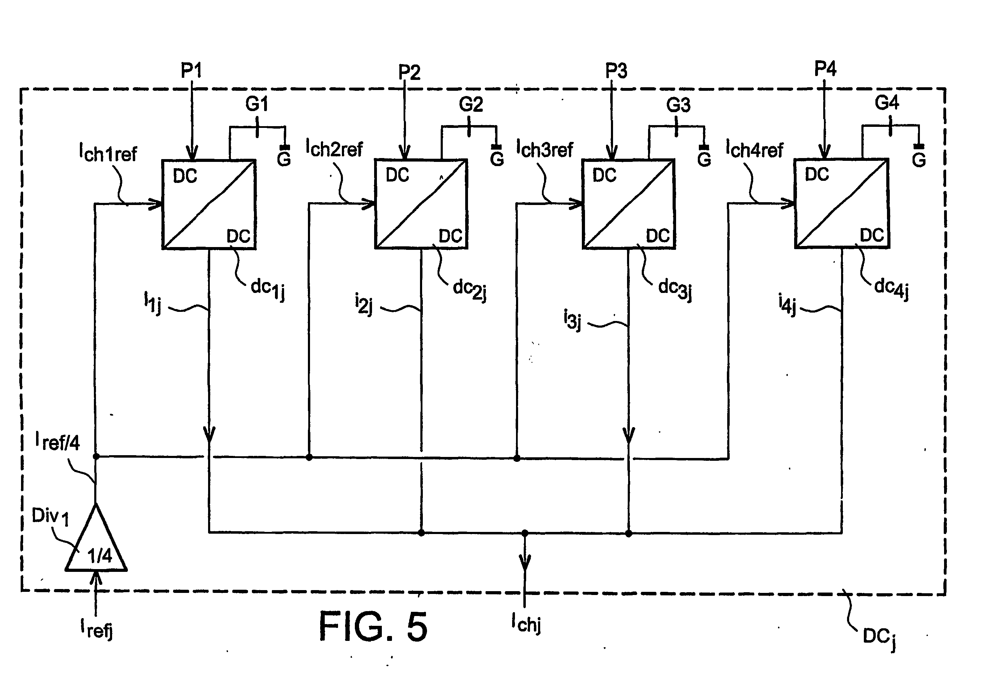

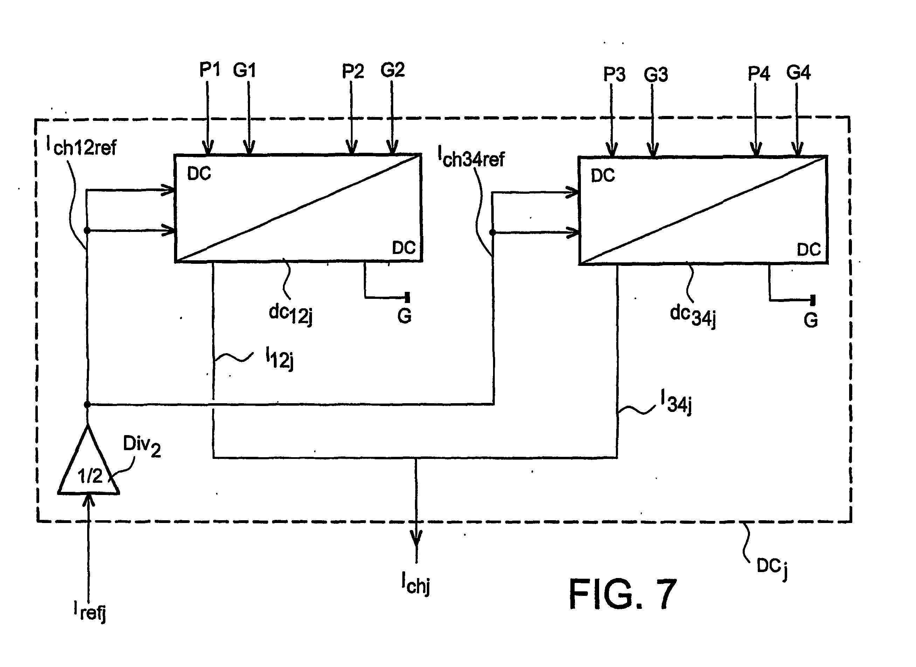

Chaque convertisseur $DC_j$ comprend quatre ports d'entrée et un port de sortie. Chaque port d'entrée est relié aux bornes de sortie d'un redresseur différent. Le port de sortie est relié à une charge $CH_j$. Deux exemples de convertisseurs $DC_j$ sont donnés en figures 5 et 7. Chaque convertisseur continu/continu $DC_j$ est commandé par une consigne de courant $I_{refj}$ issu du circuit de commande $CTR_j$. Le circuit de commande $CTR_j$ élabore la consigne de courant $I_{refj}$ à partir d'une référence de puissance constante $P_{ref}$ et de la tension $V_{chj}$ recueillie aux bornes de la charge $CH_j$. La commande en courant est effectuée de sorte que le courant $I_{chj}$ qui parcourt la charge $CH_j$ soit sensiblement égal à la consigne $I_{refj}$.

La figure 5 représente un premier schéma de principe de convertisseur continu/continu $DC_j$ selon l'invention.

Le convertisseur $DC_j$ comprend quatre convertisseurs continu/continu élémentaires $dc_{ij}$, et un diviseur par quatre Div1. Chaque convertisseur élémentaire $dc_{ij}$ comprend un port d'entrée et un port de sortie. Le port d'entrée d'un convertisseur $dc_{ij}$ est relié aux bornes $P_i$ et $G_i$. Les bornes $G_i$ sont reliées entre elles. Les ports de sortie des convertisseurs $dc_{ij}$ sont reliés entre eux et à une même charge $CH_j$ non représentée sur la figure. Le diviseur par quatre Div1 permet de répartir la consigne de courant $I_{refj}$ sous la forme de quatre consignes de courant élémentaires $I_{refj}/4$ appliquées, chacune, à un convertisseur $dc_{ij}$ pour asservir le courant $I_{ij}$ délivré par un convertisseur élémentaire $dc_{ij}$ à une valeur de consigne $I_{chiref}$ sensiblement égale à $I_{refj}/4$. Il s'ensuit que le courant $I_{chj}$ délivré par un convertisseur $DC_j$ est sensiblement égal à $I_{refj}$.

Le dispositif d'alimentation selon l'invention permet ainsi de réaliser un équilibrage des courants entre les différents redresseurs. Il est alors avantageusement possible d'éliminer les harmoniques au primaire des transformateurs, tout en permettant un fonctionnement optimal des redresseurs.

Lorsque les valeurs des charges $CH_j$ (j=1, 2, 3, 4) sont très différentes les une des autres, les courants vus par les redresseurs ne sont identiques que si les régulations des convertisseurs continu/continu sont suffisamment rapides. Des transistors IGBT (IGBT pour « Insulated Gate Bipolar Transistor ») ou IGCT (IGCT pour « Integrated Gate Commutated Thyristor ») sont alors utilisés dans la conception des convertisseurs continu/continu.

L'association des redresseurs et des convertisseurs continu/continu sous forme matricielle présente plusieurs avantages parmi lesquels celui d'assurer facilement l'équilibrage des courants entre les différents transformateurs et celui de pouvoir s'adapter aisément à une modification du nombre de redresseurs et/ou de charges selon la puissance de sortie visée.

De façon générale, une alimentation à structure matricielle selon l'invention comporte autant de lignes qu'il y a de secondaires de transformateurs et autant de colonnes qu'il y a d'électrodes de charge. La figure 4 représente donc le cas particulier pour lequel il y a quatre secondaires de transformateur et quatre électrodes de charge, soit quatre colonnes et quatre lignes.

Avantageusement, selon l'invention, il est possible de conserver un contrôle de l'arc électrique pour une grande plage de tension en sortie des convertisseurs continu/continu.

Le dispositif d'alimentation en courant continu est également conçu pour exploiter d'autres propriétés. Par exemple, le facteur de puissance $\cos\varphi$ est préférentiellement constant et élevé (par exemple $\cos\varphi=0,93$).

Selon les gammes de puissance souhaitées, par exemple quelques dizaines de MW, l'inductance parasite et le courant en amont du pont redresseur peuvent être suffisamment importants pour assurer une conduction continue. La self-inductance du côté continu du redresseur peut alors être supprimée.

Plusieurs transformateurs associés en parallèle sont utilisés afin d'atteindre la puissance de sortie désirée. Cette particularité peut être mise à profit en utilisant des couplages particuliers des transformateurs afin d'éliminer les harmoniques basse fréquence générés par les redresseurs. Ainsi, pour une association parallèle de n redresseurs en pont triphasés, le premier harmonique du courant d'entrée autre que le fondamental, est situé à (6 x n -1) la fréquence du réseau.

La bande passante d'un redresseur à thyristors est limitée par la fréquence du réseau. Alors que pour un convertisseur à MLI, elle ne dépend que de la fréquence de découpage des interrupteurs et du nombre de convertisseurs mis en parallèle. La régulation de courant obtenue par un convertisseur à MLI sera donc meilleure que celle obtenue par un redresseur à thyristors.

Dans le fonctionnement du convertisseur à puissance constante selon l'invention, la puissance active P ainsi que la puissance réactive Q, dépendante des inductances de fuites, sont toutes deux sensiblement constantes.

La diminution significative du "flicker" et des harmoniques rend avantageusement les filtres anti-harmoniques et les circuits SVC superflus.

Les alimentations pour four à arc selon l'art connu sont basées sur des convertisseurs rustiques et polluants auxquels il est nécessaire d'adjoindré des systèmes de dépollution. Au contraire, l'invention permet de réaliser un convertisseur structurellement peu polluant.

Selon l'invention, les convertisseurs élémentaires sont commandés à puissance constante. Cela se traduit, pour des convertisseurs à MLI, par un courant moyen sensiblement constant dans les interrupteurs commandés. Le dimensionnement des convertisseurs s'en trouve réduit et la contrainte est alors reportée sur les diodes. La zone de fonctionnement des convertisseurs à puissance constante est alors limitée par le dimensionnement des diodes. C'est donc le choix des diodes qui conditionne le courant maximum d'utilisation. La tension nominale d'un four à arc à courant continu est généralement égale à 800V et la tension maximale à 1200V. Des semiconducteurs de tenue en tension sensiblement égale à 2500V sont alors suffisants pour atteindre la tension de sortie désirée. Pour un four à arc dont la tension maximale dépasse 1200V, une mise en série est préférentiellement requise.

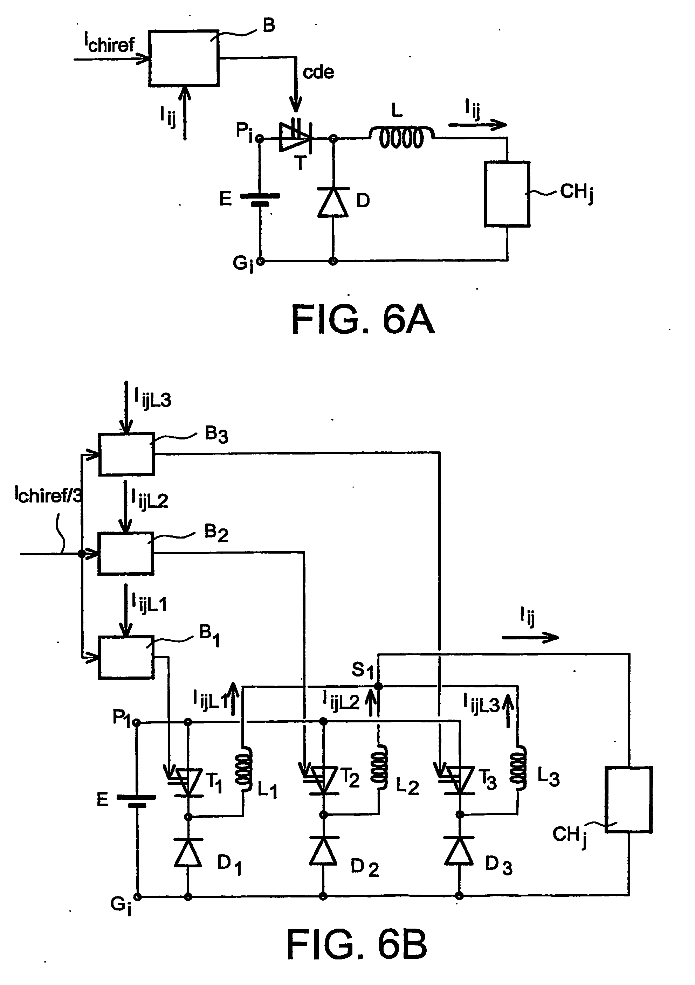

La figure 6A représente un premier exemple de convertisseur continu/continu élémentaire $dc_{ij}$ tel que mis en oeuvre dans un convertisseur continu/continu $DC_j$ selon la figure 5.

Le convertisseur élémentaire $dc_{ij}$ est une cellule de commutation comprenant un interrupteur commandé T, une diode D, une self-inductance L et un circuit de régulation B. Le bloc de régulation B élabore la commande de l'interrupteur T à partir de la consigne $I_{chiref}$ et du courant mesuré $I_{ij}$. L'interrupteur commandé T comprend une cathode, une anode et une électrode de commande sur laquelle est appliqué l'ordre de commande issu du bloc B. L'anode et la cathode de l'interrupteur T sont respectivement reliées à la borne $P_i$ et à la cathode de la diode D dont l'anode est reliée à la borne $G_i$. La self-inductance L a une première borne reliée à la cathode de l'interrupteur T et une deuxième borne reliée à la sortie du convertisseur. La tension E appliquée en entrée du convertisseur élémentaire $dc_{ij}$ représente, de façon symbolique, la tension recueillie entre les bornes $P_i$ et $G_i$.

La figure 6B représente un deuxième exemple de convertisseur continu/continu élémentaire selon l'invention.

Le convertisseur continu/continu élémentaire selon ce deuxième exemple comprend une mise en parallèle de trois circuits tels que le circuit représenté en figure 6A. Le convertisseur continu/continu comprend ainsi trois interrupteurs commandés T1, T2, T3, trois diodes D1, D2, D3 et trois self-inductances L1, L2, L3. Il est alors nécessaire d'équilibrer les courants entre les trois circuits de commutation. Cet équilibrage peut être contrôlé soit en régulant le courant de chaque circuit, soit en utilisant une seule régulation associée à un filtre de rééquilibrage. Les commandes des différentes cellules peuvent être entrelacées, ce qui permet d'augmenter la fréquence de découpage apparente et, partant, de réduire la taille des éléments de filtrage. Sur l'exemple représenté en figure 6B, chaque interrupteur $T_k$ (k= 1, 2, 3) est commandé par le bloc de régulation $B_k$ (k=1,2,3). Le courant $I_{ij}$ est égal à la somme des courants $I_{ijL1}$, $I_{ijL2}$ et $I_{ijL3}$ qui parcourent les self-inductances respectives L1, L2 et L3.

Le convertisseur $dc_{ij}$ représenté en figure 6B comprend trois circuits élémentaires tels que représentés en figure 6A. De façon plus générale, un convertisseur $dc_{ij}$ selon le mode de réalisation de l'invention représenté en figure 6B comprend p circuits élémentaires tels que représentés en figure 6A, p étant un entier supérieur à 1. La consigne appliquée à chaque bloc de régulation $B_k$ est alors égale à $I_{chiref}/p$.

La figure 7 représente un deuxième schéma de principe de convertisseur continu/continu $DC_j$ selon l'invention.

Le convertisseur continu/continu $DC_j$ selon la figure 7 comprend deux convertisseurs continu/continu élémentaires $dc_{12j}$ et $dc_{34j}$, et un diviseur par deux Div2. Chacun des deux convertisseurs continu/continu élémentaires comprend deux ports d'entrée et un port de sortie. Un premier port d'entrée du convertisseur $dc_{12j}$ est relié aux bornes $P_1$ et $G_1$ et le deuxième port d'entrée aux bornes $P_2$ et $G_2$. De même, un premier port d'entrée du convertisseur $dc_{34j}$ est relié aux bornes $P_3$ et $G_3$ et le deuxième port d'entrée aux bornes $P_4$ et $G_4$. Les ports de sortie des deux convertisseurs élémentaires sont reliés entre eux et à une même charge $CH_j$ non représentée sur la figure. La consigne de chaque convertisseur élémentaire : $dc_{12j}$ et $dc_{34j}$ est sensiblement égale à $I_{refj}/2$.

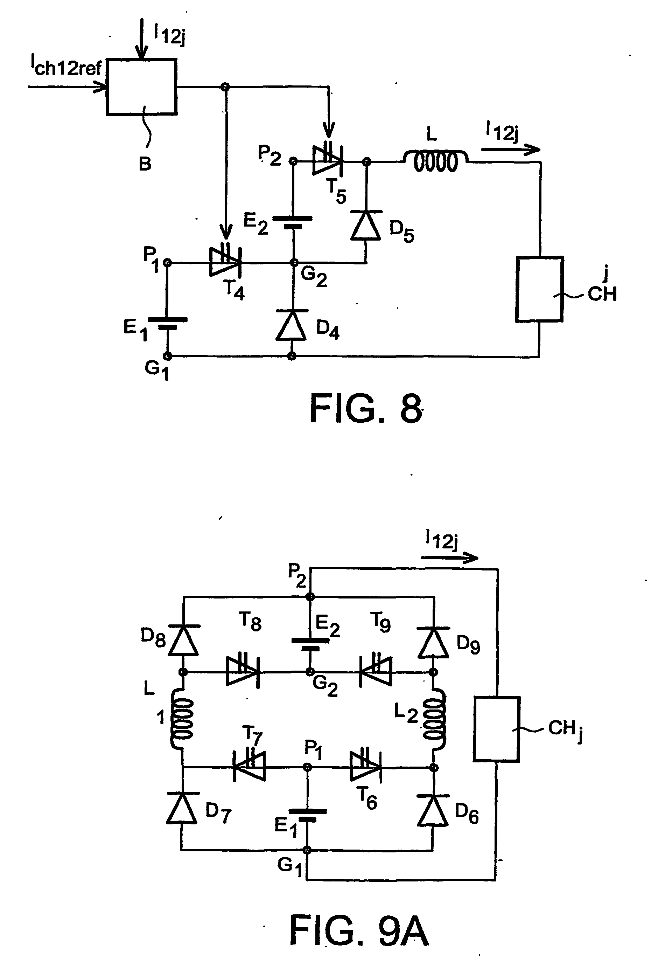

La figure 8 représente un premier exemple de mise en oeuvre de convertisseur continu/continu élémentaire selon la figure 7.

Le convertisseur continu/continu selon la figure 8 représente le convertisseur $dc_{12j}$ relié aux bornes $P_1$, $G_1$, $P_2$, $G_2$. Le convertisseur $dc_{12j}$ comprend deux interrupteurs commandés $T_4$ et $T_5$, deux diodes $D_4$ et $D_5$, une self-inductance L et un bloc de régulation B qui élabore les commandes des interrupteurs $T_4$ et $T_5$ en fonction de la consigne $I_{ch12ref}$ et du courant $I_{12j}$. La tension E1 représente de façon symbolique la tension délivrée entre les bornes $P_1$ et $G_1$ et la tension E2 représente de façon symbolique la tension délivrée entre les bornes $P_2$ et $G_2$.

Chaque interrupteur comprend une anode, une cathode et une électrode de commande. L'interrupteur $T_4$ a son anode reliée à la borne $P_1$ et sa cathode reliée à la borne $G_2$ et à la cathode de la diode $D_4$ dont l'anode est reliée à la borne $G_1$. De même, l'interrupteur $T_5$ a son anode reliée à la borne $P_2$ et sa cathode reliée à une première borne de la self-inductance L et à la cathode de la diode $D_5$ dont l'anode est reliée à la cathode de la diode $D_4$. La deuxième borne de la self-inductance L est reliée à la sortie du convertisseur.

Les diodes sont surdimensionnées pour étendre la zone de fonctionnement du convertisseur vers les forts courants.

Le convertisseur $dc_{12j}$ permet avantageusement d'entrelacer les commandes et donc d'augmenter la fréquence de découpage apparente du convertisseur d'un facteur 2.

Le convertisseur continu/continu élémentaire $dc_{34j}$ n'est pas représenté sur les figures jointes. Sa structure est identique à celle du convertisseur $dc_{12j}$. Les bornes $P_3$, $P_4$, $G_3$ et $G_4$ correspondent alors respectivement aux bornes $P_1$, $P_2$, $G_1$ et $G_2$.

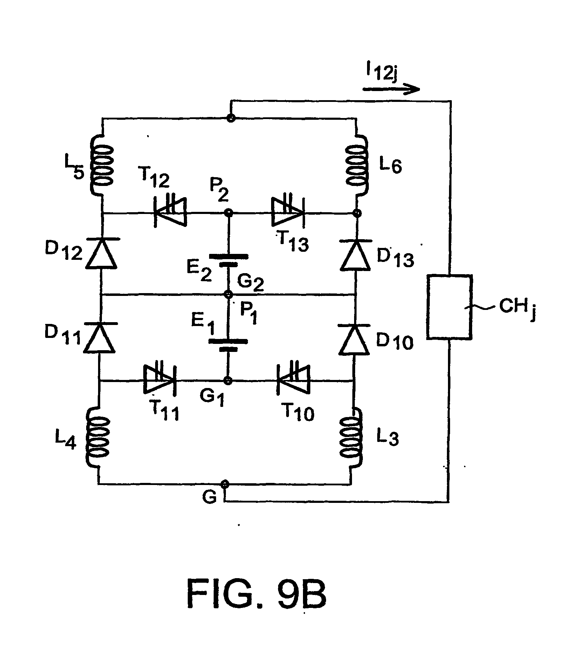

Les figures 9A et 9B représentent deux autres exemples de convertisseurs continu/continu élémentaires mis en oeuvre dans un convertisseur tel que représenté en figure 7.

Le convertisseur continu/continu selon la figure 9A représente le convertisseur $dc_{12j}$ relié aux bornes $P_1$, $G_1$, $P_2$, $G_2$. Le convertisseur comprend quatre interrupteurs commandés $T_6$, $T_7$, $T_8$, $T_9$, quatre diodes $D_6$, $D_7$, $D_8$, $D_9$, deux self-inductances $L_1$ et $L_2$.

La borne $P_1$ est reliée aux anodes des interrupteurs $T_6$ et $T_7$ dont les cathodes sont respectivement reliées aux cathodes des diodes $D_6$ et $D_7$ dont les anodes sont reliées à la borne $G_1$. De même, la borne $G_2$ est reliée aux cathodes des interrupteurs $T_8$ et $T_9$ dont les anodes sont respectivement reliées aux anodes des diodes $D_8$ et $D_9$ dont les cathodes sont reliées à la borne $P_2$.

La self-inductance $L_1$ a une première borne reliée aux cathodes de $T_7$ et $D_7$ et une deuxième borne reliée aux anodes de $T_8$ et $D_8$. De même, la self-inductance $L_2$ a une première borne reliée aux cathodes de $T_6$ et $D_6$ et une deuxième borne reliée aux anodes de $T_9$ et $D_9$. La sortie du convertisseur est alors prise entre les bornes $P_2$ et $G_1$.

Le convertisseur selon la figure 9A permet d'obtenir une fréquence de découpage apparente, dans chacune des inductances $L_1$ et $L_2$, deux fois supérieure à celle d'un interrupteur seul. La fréquence de découpage apparente en sortie du convertisseur est donc égale à 4 fois celle d'un interrupteur seul.

Le convertisseur selon la figure 9B comprend quatre interrupteurs commandés $T_{10}$, $T_{11}$, $T_{12}$, $T_{13}$, quatre diodes $D_{10}$, $D_{11}$, $D_{12}$, $D_{13}$ et quatre self-inductances $L_3$, $L_4$, $L_5$, $L_6$.

Les bornes $P_1$ et $G_2$ sont reliées ensemble et aux cathodes des diodes $D_{10}$ et $D_{11}$ ainsi qu'aux anodes des diodes $D_{12}$ et $D_{13}$. Les anodes des diodes $D_{10}$ et $D_{11}$ sont respectivement reliées aux anodes des interrupteurs $T_{10}$ et $T_{11}$ dont les cathodes sont reliées à la même borne $G_1$. Les cathodes des diodes $D_{12}$ et $D_{13}$ sont respectivement reliées aux cathodes des interrupteurs $T_{12}$ et $T_{13}$ dont les anodes sont reliées à la même borne $P_2$.

La self-inductance $L_3$ a une première borne reliée aux anodes de $D_{10}$ et $T_{10}$ et la self-inductance $L_4$ a une première borne reliée aux anodes de $D_{11}$ et $T_{11}$, les deuxièmes bornes des self-inductances $L_3$ et $L_4$ étant reliées entre elles et à une même borne G. De même, la self-inductance $L_5$ a une première borne reliée aux cathodes de $D_{12}$ et $T_{12}$ et la self-inductance $L_6$ a une première borne reliée aux cathodes de $D_{13}$ et $T_{13}$, les deuxièmes bornes des self-inductances étant reliées entre elles et à la borne de sortie du convertisseur.

La fréquence de découpage apparente dans les inductances est ici celle des interrupteurs. La fréquence de découpage apparente en sortie est donc de 2 fois celle d'un interrupteur seul.

La première solution (figure 9A) permet d'obtenir une ondulation de courant nulle au point nominal mais la tension de mode commun ne se répartit pas équitablement sur les deux sources.

La deuxième solution (figure 9B) est moins pénalisante du point de vue des perturbations de mode commun au niveau des sources de tension d'entrée. En effet, celles-ci possèdent un point commun, elles voient donc les perturbations de la même façon.

Le principe de mise en série et parallèle développé ici, permet donc d'élargir la gamme de puissance contrôlable. Les propriétés de la structure sont: augmentation de la fréquence de découpage apparente en entrée et en sortie des groupements de convertisseurs, diminution de l'ondulation de courant en entrée et en sortie des groupements de convertisseurs, équilibrage des courants entre les cellules de commutations réalisé par les régulations, disposition des redresseurs d'entrée permettant d'obtenir une absorption quasi sinusoïdale du courant.

La fréquence de découpage élevée, combinée avec l'entrelacement des commandes des hacheurs, permet d'obtenir un convertisseur rapide, capable de "suivre" les évolutions de la tension d'arc grâce à une bande passante élevée.

L'alimentation de four à arc à courant continu présentée ici est adaptée aussi bien du côté de la charge que du côté du réseau et apporte plusieurs avantages par rapport aux solutions de l'art connu. En effet, d'une part, les extinctions d'arc sont minimisées et, d'autre part, la puissance de fusion est maintenue constante. Ceci se traduit par un gain de productivité important. Un gain de productivité de 5 à 10% peut ainsi être réalisé.

Les puissances active et réactive absorbées sur le réseau sont sensiblement constantes ce qui supprime le phénomène de flicker. Il est alors possible de se passer dès circuits de filtrage et des circuits anti-flicker (cf. SVC). Le coût total de l'alimentation peut se trouver réduit.

De par la nature peu polluante du convertisseur, il est envisageable d'installer des fours à arc sur des réseaux disposant d'une faible puissance de court-circuit. D'une façon générale, on considère qu'il est possible d'installer un four à arc sur un réseau donné si la puissance de court-circuit du réseau $S_{ccn}$ et la puissance de court-circuit du four $S_{ccf}$ sont dans un rapport tel que :

- pour un four à courant alternatif, $S_{ccn}/S_{ccf} > 36$ et,
- pour un four à courant continu, $S_{ccn}/S_{ccf} > 18$.

Selon l'invention, la structure envisagée est susceptible de permettre l'installation d'un four à arc, par exemple, sur un réseau de tension efficace de 90kV ou 63kV pour une puissance de 100 MW.

La conception modulaire du convertisseur permet de concevoir des installations de puissance très différentes à partir des mêmes briques élémentaires. L'installation finale pourra donc se limiter à l'assemblage du nombre de modules suffisant.

## Revendications

**1.** Dispositif d'alimentation en courant continu de M charges ($CH_j$) de four à arc, M étant un nombre entier supérieur ou égal à 2, le dispositif comprenant :

- au moins un transformateur (28, 29) alimenté à son primaire par un courant alternatif triphasé et délivrant, sur au moins deux secondaires, un courant triphasé, et
- N redresseurs à diodes ($RD_i$), chaque redresseur à diodes ayant un port d'entrée et un port de sortie, un port d'entrée de redresseur à diodes étant reliée à un secondaire différent de transformateur,

**caractérisé en ce qu'**il comprend M ensembles ($DC_j$) de m convertisseurs continu/continu élémentaires ($dc_{ij}$), m étant un nombre entier inférieur ou égal à N, chaque ensemble de m convertisseurs continu/continu élémentaires ayant N entrées et une sortie, une entrée d'un ensemble de m convertisseurs étant reliée à un port de sortie différent de redresseur à diodes, la sortie d'un ensemble de m convertisseurs étant reliée à une charge différente, chaque ensemble de m convertisseurs continu/ continu élémentaires étant commandé par une consigne de courant $I_{refj}$ (j=1, ..., M) élaborée à partir d' une consigne de puissance constante $P_{ref}$, de sorte que le courant continu d'alimentation $I_{chj}$ de la charge de rang j (j=1, ..., M) soit donné par la formule :

$$I_{chj} = P_{ref} / V_{chj},$$

où $V_{chj}$ est la tension mesurée aux bornes de la charge de rang j.

**2.** Dispositif d'alimentation en courant continu selon la revendication 1, **caractérisé en ce que** chaque, convertisseur continu/continu élémentaire de l'ensemble de m convertisseurs continu/continu élémentaires de rang j (j=1, ..., M) commandé par la consigne de courant $I_{refj}$ est commandé par une consigne de courant élémentaire $I_{refj}/m$ élaborée à partir de la consigne de courant $I_{refj}$, le courant d'alimentation $I_{chj}$ de la charge de rang j (j=1, ..., N) étant égal à la somme des courants délivrés par les m convertisseurs continu/continu élémentaires.

**3.** Dispositif d'alimentation en courant continu selon la revendication 1 ou 2, **caractérisé en ce que**, m étant égal à N, un redresseur étant muni d'un port de sortie comprenant deux bornes ($Pi$, $G_i$), un convertisseur continu/continu élémentaire ($dc_{ij}$) est constitué d'au moins un ensemble comprenant un interrupteur commandé (T) comprenant une anode, une cathode et une électrode de commande, une diode (D), une self-inductance (L) et un bloc de régulation (B) qui élabore la commande de l'interrupteur (T), l'anode de l'interrupteur étant reliée à une première borne du port de sortie d'un redresseur dont la deuxième borne du port de sortie est reliée à une électrode mobile, la cathode de l'interrupteur étant reliée à la cathode de la diode et à une première borne de la self-inductance dont la deuxième borne constitue la sortie du convertisseur continu/ continu élémentaire, l'anode de la diode étant reliée à la masse.

**4.** Dispositif d'alimentation en courant continu selon la revendications 1 ou 2, **caractérisé en ce que**, m étant égal à N/2, un redresseur étant muni d'un port de sortie comprenant deux bornes ($P_i$, $G_i$), un convertisseur continu/continu élémentaire ($dc_{ij}$) comprend deux interrupteurs commandés ($T_4$, $T_5$), deux diodes ($D_4$, $D_5$), une self-inductance (L), chaque interrupteur commandé comprenant une anode, une cathode et une électrode de commande, un premier interrupteur ($T_4$) ayant son anode reliée à une première borne ($P_1$) du port de sortie d'un premier redresseur et sa cathode reliée à une deuxième borne ($G_2$) du port de sortie d'un deuxième redresseur et à la cathode d'une première diode ($D_4$) dont l'anode est reliée à une deuxième borne ($G_1$) du port de sortie d'un premier redresseur, le deuxième interrupteur ($T_5$) ayant son anode reliée à la première borne ($P_2$) d'un deuxième redresseur et sa cathode reliée à une première borne de la self-inductance L et à la cathode de la deuxième diode ($D_5$) dont l'anode est reliée à la cathode de la première diode ($D_4$), la deuxième borne de la self-inductance L étant reliée à la sortie du convertisseur.

**5.** Dispositif d'alimentation en courant continu selon la revendication 1 ou 2, **caractérisé en ce que**, m étant égal à N/2, un redresseur étant muni d'un port de sortie comprenant deux bornes ($P_i$, $G_i$), un convertisseur continu/continu élémentaire ($dc_{ij}$) comprend au moins un ensemble de quatre interrupteurs commandés $T_6$, $T_7$, $T_8$, $T_9$, de quatre diodes $D_6$, $D_7$, $D_8$, $D_9$ et de deux self-inductances $L_1$, $L_2$, chaque interrupteur commandé comprenant une anode, une cathode et une électrode de commande, une première borne ($P_1$) du port de sortie d'un premier redresseur est reliée aux anodes de deux premiers interrupteurs $T_6$ et $T_7$ dont les cathodes sont respectivement reliées aux cathodes des deux diodes $D_6$ et $D_7$ dont les anodes sont reliées à la deuxième borne ($G_1$) du port de sortie d'un premier redresseur, la deuxième borne ($G_2$) du port de sortie d'un deuxième redresseur étant reliée aux cathodes des interrupteurs T8 et $T_9$ dont les anodes sont respectivement reliées aux anodes des diodes $D_8$ et $D_9$ dont les cathodes sont reliées à la première borne ($P_2$) d'un deuxième redresseur, la self-induc-

tance $L_1$ ayant une première borne reliée aux cathodes de $T_7$ et $D_7$ et une deuxième borne reliée aux anodes de $T_8$ et $D_8$, la self-inductance $L_2$ ayant une première borne reliée aux cathodes de $T_6$ et $D_6$ et une deuxième borne reliée aux anodes de $T_9$ et $D_9$, la sortie du convertisseur élémentaire étant prise entre la première borne ($P_2$) du port de sortie du deuxième redresseur et la deuxième borne ($G_1$) du port de sortie du premier redresseur.

6. Dispositif d'alimentation en courant continu selon la revendication 1 ou 2, **caractérisé en ce que**, m étant égal à N/2, un redresseur étant muni d'un port de sortie comprenant deux bornes ($P_i$, $G_i$), un convertisseur continu/continu élémentaire ($dc_{ij}$) comprend au moins un ensemble de quatre interrupteurs commandés $T_{10}$, $T_{11}$, $T_{12}$, $T_{13}$, de quatre diodes $D_{10}$, $D_{11}$, $D_{12}$, $D_{13}$ et de quatre self-inductances $L_3$, $L_4$, $L_5$, $L_6$, chaque interrupteur commandé comprenant une anode, une cathode et une électrode de commande, une première borne de sortie (P1) d'un premier redresseur et une deuxième borne de sortie ($G_2$) d'un deuxième redresseur étant reliées ensemble et aux cathodes des diodes $D_{10}$ et $D_{11}$ ainsi qu'aux anodes des diodes $D_{12}$ et $D_{13}$, les anodes des diodes $D_{10}$ et $D_{11}$ étant respectivement reliées aux anodes des interrupteurs $T_{10}$ et $T_{11}$ dont les cathodes sont reliées à une même deuxième borne de sortie ($G_1$) du premier redresseur, les cathodes des diodes $D_{12}$ et $D_{13}$ étant respectivement reliées aux cathodes des interrupteurs $T_{12}$ et $T_{13}$ dont les anodes sont reliées à la première borne de sortie ($P_2$) du deuxième redresseur, la self-inductance $L_3$ ayant une première borne reliée aux anodes de $D_{10}$ et $T_{10}$ et la self-inductance $L_4$ ayant une première borne reliée aux anodes de $D_{11}$ et $T_{11}$, les deuxièmes bornes des self-inductances $L_3$ et $L_4$ étant reliées entre elles et à une même borne (G), la self-inductance $L_5$ ayant une première borne reliée aux cathodes de $D_{12}$ et $T_{12}$ et la self-inductance $L_6$ ayant une première borne reliée aux cathodes de $D_{13}$ et $T_{13}$, les deuxièmes bornes des self-inductances étant reliées entre elles et à la borne de sortie du convertisseur.

**Patentansprüche**

1. Vorrichtung zur Versorgung mit Gleichstrom von M Lasten ($CH_j$) eines Lichtbogenofens, wobei M eine ganze Zahl gleich oder größer 2 ist, und wobei die Vorrichtung umfasst:

   - mindestens einen Transformator (28,29), der auf seiner Primärseite von einem dreiphasigen Wechselstrom gespeist wird und auf mindestens zwei Sekundärseiten einen dreiphasigen Strom liefert, und

   - N Dioden-Gleichrichter ($RD_i$) wobei jeder Dioden-Gleichrichter einen Eingangsanschluss und einen Ausgangsanschluss aufweist, und ein Eingangsanschluss des Dioden-Gleichrichters mit einer anderen Sekundärseite des Transformators verbunden ist,

   **dadurch gekennzeichnet, dass** er M Einheiten ($DC_j$) aus m elementaren Gleichstrom/Gleichstrom-Wandlern ($dc_{ij}$) umfasst, wobei m eine ganze Zahl gleich oder kleiner N ist, jede Einheit aus m elementaren Gleichstrom/Gleichstrom-Wandlern N Eingänge und einen Ausgang aufweist, wobei ein Eingang einer Einheit aus m Wandlern mit einem anderen Ausgangsanschluss des Dioden-Gleichrichters verbunden ist, der Ausgang einer Einheit aus m Wandlern mit einer unterschiedlichen Last verbunden ist, wobei jede Einheit aus m elementaren Gleichstrom/Gleichstrom-Wandlern von einem Strom-Bezugswert $I_{refj}$ (j = 1, .., M) gesteuert ist, der ausgehend von einem konstanten Leistungs-Bezugswert $P_{ref}$ ermittelt wurde, so dass der Versorgungsgleichstrom $I_{chj}$ der Last vom Rang j (j = 1, ..., M) durch die Formel

$$I_{chj} = P_{ref} / V_{chj},$$

   gegeben ist, wobei $V_{chj}$ die an den Klemmen der Last vom Rang j gemessene Spannung ist.

2. Vorrichtung zur Versorgung mit Gleichstrom nach Anspruch 1, **dadurch gekennzeichnet, dass** jeder elementare Gleichstrom/Gleichstrom-Wandler der Einheit von m elementaren Gleichstrom/Gleichstrom-Wandlern vom Rang j (j = 1, ..., M), der von dem Strom-Bezugswert $I_{refj}$ gesteuert ist, von einem elementaren Strom-Bezugswert $I_{refj}$/m gesteuert wird, der ausgehend von dem Strom-Bezugswert $I_{refj}$ ermittelt wurde, gesteuert wird, wobei der Versorgungsstrom $I_{chj}$ der Last vom Rang j (j = 1, ..., N) gleich der Summe der von den m elementaren Gleichstrom/Gleichstrom-Wandlern gelieferten Ströme ist.

3. Vorrichtung zur Versorgung mit Gleichstrom nach Anspruch 1 oder 2, **dadurch gekennzeichnet, dass** bei m gleich N, wobei ein Gleichrichter mit einem zwei Klemmen ($P_i$, $G_i$) umfassenden Ausgangsanschluss versehen ist, ein elementarer Gleichstrom/Gleichstrom-Wandler ($dc_{ij}$) aus mindestens einer Einheit gebildet ist, welche einen Steuerschalter (T) umfasst, der eine Anode, eine Kathode und eine Steuerelektrode, eine Diode (D), eine Selbstinduktanz (L) und einen Regelungsblock (B), welcher die Steuerung des Schalters (T) regelt, aufweist, wobei die Anode des Schalters mit einer ersten Klemme des Ausgangsanschlusses eines Gleichrichters verbunden ist, dessen zweite Klemme des Ausgangsanschlusses mit einer beweglichen Elektrode verbunden ist, und wobei die Kathode des Schalters mit der Kathode der Diode sowie mit einer ersten Klemme der Selbstinduktanz verbunden ist, deren zweite Klemme den Ausgang des elementaren Gleichstrom/Gleichstrom-Wandlers bildet, wobei die Anode der Diode mit der Masse verbunden ist.

4. Vorrichtung zur Versorgung mit Gleichstrom nach Anspruch 1 oder 2, **dadurch gekennzeichnet, dass** bei m gleich N/2, wobei ein Gleichrichter mit einem zwei Klemmen ($P_i$, $G_i$) umfassenden Ausgangsanschluss versehen ist, ein elementarer Gleichstrom/Gleichstrom-Wandler ($dc_{ij}$) zwei Steuerschalter ($T_4$, $T_5$), zwei Dioden ($D_4$, $D_5$) und eine Selbstinduktanz (L) umfasst, wobei jeder Steuerschalter eine Anode, eine Kathode und eine Steuerelektrode umfasst, wobei die Anode eines ersten Schalters ($T_4$) mit einer ersten Klemme ($P_1$) des Ausgangsanschlusses eines ersten Gleichrichters verbunden ist und seine Kathode mit einer zweiten Klemme ($G_2$) des Ausgangsanschlusses eines zweiten Gleichrichters und mit der Kathode einer ersten Diode ($D_4$) verbunden ist, deren Anode mit einer zweiten Klemme ($G_1$) des Ausgangsanschlusses eines ersten Gleichrichters verbunden ist, wobei die Anode des zweiten Schalters ($T_5$) mit einer ersten Klemme ($P_2$) eines zweiten Gleichrichters verbunden ist und seine Kathode mit einer ersten Klemme der Selbstinduktanz (L) und mit der Kathode der zweiten Diode ($D_5$) verbunden ist, deren Anode mit der Kathode der ersten Diode ($D_4$) verbunden ist, und wobei die zweite Klemme der Selbstinduktanz (L) mit dem Ausgang des Wandlers verbunden ist.

5. Vorrichtung zur Versorgung mit Gleichstrom nach Anspruch 1 oder 2, **dadurch gekennzeichnet, dass** bei m gleich N/2, wobei ein Gleichrichter mit einem zwei Klemmen ($P_i$, $G_i$) umfassenden Ausgangsanschluss versehen ist, ein elementarer Gleichstrom/Gleichstrom-Wandler ($dc_{ij}$) mindestens eine Einheit aus vier Steuerschaltern ($T_6$, $T_7$, $T_8$, $T_9$), aus vier Dioden ($D_6$, $D_7$, $D_8$, $D_9$) und zwei Selbstinduktanzen ($L_1$, $L_2$) umfaßt, wobei jeder Steuerschalter eine Anode, eine Kathode und eine Steuerelektrode aufweist, eine erste Klemme ($P_1$) des Ausgangsanschlusses eines ersten Gleichrichters mit den Anoden von zwei ersten Schaltern ($T_6$) und ($T_7$) verbunden ist, deren Kathoden jeweils mit den Kathoden der zwei Dioden ($D_6$) und ($D_7$) verbunden ist, deren Anoden mit der zweiten Klemme ($G_1$) des Ausgangsanschlusses eines ersten Gleichrichters verbunden ist, wobei die zweite Klemme ($G_2$) des Ausgangsanschlusses eines zweiten Gleichrichters mit den Kathoden der Schalter ($T_8$) und ($T_9$) verbunden ist, deren Anoden jeweils mit den Anoden der Dioden ($D_8$) und ($D_9$) verbunden ist, deren Kathoden mit der ersten Klemme ($P_2$) eines zweiten Gleichrichters verbunden ist, wobei die erste Klemme der Selbstinduktanz ($L_1$) mit den Kathoden von ($T_7$) und ($D_7$) verbunden ist und eine zweite Klemme mit den Anoden von ($T_8$) und ($D_8$) verbunden ist, wobei eine erste Klemme der Selbstinduktanz ($L_2$) mit den Kathoden von ($T_6$) und ($D_6$) verbunden ist und eine zweite Klemme mit den Anoden von ($T_9$) und ($D_9$) verbunden ist, und wobei der Ausgang des elementaren Wandlers zwischen die erste Klemme ($P_2$) des Ausgangsanschlusses des zweiten Gleichrichters und die zweite Klemme ($G_1$) des Ausgangsanschlusses des ersten Gleichrichters geschaltet ist.

6. Vorrichtung zur Versorgung mit Gleichstrom nach Anspruch 1 oder 2, **dadurch gekennzeichnet, dass** bei m gleich N/2, wobei ein Gleichrichter mit einem Ausgangsanschluss mit zwei Klemmen ($P_i$, $G_i$) versehen ist, ein elementarer Gleichstrom/ Gleichstrom-Wandler ($dc_{ij}$) mindestens eine Einheit aus vier Steuerschaltern ($T_{10}$, $T_{11}$, $T_{12}$, $T_{13}$), aus vier Dioden ($D_{10}$, $D_{11}$, $D_{12}$, $D_{13}$) und aus vier Selbstinduktanzen ($L_3$, $L_4$, $L_5$, $L_6$) umfasst, wobei jeder Steuerschalter eine Anode, eine Kathode und eine Steuerelektrode umfasst, eine erste Ausgangsklemme ($P_1$) eines ersten Gleichrichters und eine zweite Ausgangsklemme ($G_2$) eines zweiten Gleichrichters miteinander, mit den Kathoden der Dioden ($D_{10}$) und ($D_{11}$) sowie mit den Anoden der Dioden ($D_{12}$) und ($D_{13}$) verbunden ist, die Anoden der Dioden ($D_{10}$) und ($D_{11}$) jeweils mit den Anoden der Schalter ($T_{10}$) und ($T_{11}$) verbunden sind, deren Kathoden mit einer gleichen zweiten Ausgangsklemme ($G_1$) des ersten Gleichrichters verbunden sind, wobei die Kathoden der Dioden ($D_{12}$) und ($D_{13}$) jeweils mit den Kathoden der Schalter ($T_{12}$) und ($T_{13}$) verbunden sind, deren Anoden mit der ersten Ausgangsklemme ($P_2$) des zweiten Gleichrichters verbunden sind, eine erste Klemme der Selbstinduktanz ($L_3$) mit den Anoden von ($D_{10}$) und ($T_{10}$) verbunden ist und eine erste Klemme der Selbstinduktanz ($L_4$) mit den Anoden von ($D_{11}$) und ($T_{11}$) verbunden ist, die zweiten Klemmen der Selbstinduktanzen ($L_3$) und ($L_4$) untereinander und mit einer gleichen Klemme (G) verbunden sind, wobei eine erste Klemme der Selbstinduktanz ($L_5$) mit den Kathoden von ($D_{12}$) und ($T_{12}$) verbunden ist und eine erste Klemme der Selbstinduktanz ($L_6$) mit den Kathoden von ($D_{13}$) und ($T_{13}$) verbunden ist und die zweiten Klemmen der Selbstinduktanzen untereinander und mit dem Ausgangsanschluss des Wandlers verbunden sind.

## Claims

1. Device for supplying DC current to M arc furnace loads ($CH_j$), M being an integer number greater than or equal to 2, the device comprising:

   - at least one transformer (28, 29) whose primary is supplied by a three-phase AC current and which delivers, from at least two secondaries, a three-phase current, and
   - N diode rectifiers ($RD_i$), each diode rectifier having one input port and one output port, one diode rectifier input port being connected to a different transformer secondary,

   **characterized in that** it comprises M assemblies ($DC_j$) of m elementary DC/DC converters ($dc_{ij}$), m being an integer number less than of equal to N, each assembly of m elementary DC/DC converters having N inputs and one output, one input of an assembly of m converters being connected to a different diode rectifier output port, the output of an assembly of m converters being connected to a different load, each assembly of m elementary DC/DC converters being controlled by a current setpoint $I_{refj}$ (j=1, ..., M) generated from a constant power setpoint $P_{ref}$, such that the DC current $I_{chj}$ supplying the load of rank j (j=1, ..., M) is given by the formula:

   $$I_{chj} = P_{ref} / V_{chj},$$

   where $V_{chj}$ is the voltage measured across the terminals of the load of rank j.

2. Device for supplying DC current according to Claim 1, **characterized in that** each elementary DC/DC converter of the assembly of m elementary DC/DC converters of rank j (j=1, ..., M) controlled by the current setpoint $I_{refj}$ is controlled by an elementary current setpoint $I_{refj}/m$ generated from the current setpoint $I_{refj}$, the current $I_{chj}$ supplying the load of rank j (j=1, ..., N) being equal to the sum of the currents delivered by the m elementary DC/DC converters.

3. Device for supplying DC current according to either of Claims 1 and 2, **characterized in that**, m being equal to N, a rectifier having an output port comprising two terminals ($P_i$, $G_i$), an elementary DC/DC converter ($dc_{ij}$) is composed of at least one assembly comprising a controlled switch (T) comprising an anode, a cathode and a control electrode, a diode (D), an inductor (L) and a regulator circuit (B) which generates the control signal for the switch (T), the anode of the switch being connected to a first terminal of the output port of a rectifier whose second terminal of the output port is connected to a mobile electrode, the cathode of the switch being connected to the cathode of the diode and to a first terminal of the inductor whose second terminal forms the output of the elementary DC/DC converter, the anode of the diode being connected to ground.

4. Device for supplying DC current according to either of Claims 1 and 2, **characterized in that**, m being equal to N/2, a rectifier having an output port comprising two terminals ($P_i$, $G_i$), an elementary DC/DC converter ($dc_{ij}$) comprises two controlled switches ($T_4$, $T_5$), two diodes ($D_4$, $D_5$), an inductor (L), each controlled switch comprising an anode, a cathode and a control electrode, a first switch ($T_4$) having its anode connected to a first terminal ($P_1$) of the output port of a first rectifier and its cathode connected to a second terminal ($G_2$) of the output port of a second rectifier and to the cathode of a first diode ($D_4$) whose anode is connected to a second terminal ($G_1$) of the output port of a first rectifier, the second switch ($T_5$) having its anode connected to the first terminal ($P_2$) of a second rectifier and its cathode connected to a first terminal of the inductor L and to the cathode of the second diode ($D_5$) whose anode is connected to the cathode of the first diode ($D_4$), the second terminal of the inductor L being connected to the output of the converter.

5. Device for supplying DC current according to either of Claims 1 and 2, **characterized in that**, m being equal to N/2, a rectifier having an output port comprising two terminals ($P_i$, $G_i$), an elementary DC/DC converter ($dc_{ij}$) comprises at least an assembly of four controlled switches $T_6$, $T_7$, $T_8$, $T_9$, of four diodes $D_6$, $D_7$, $D_8$, $D_9$ and of two inductors $L_1$, $L_2$, each con-trolled switch comprising an anode, a cathode and a control electrode, a first terminal ($P_1$) of the output port of a first rectifier is connected to the anodes of two first switches $T_6$ and $T_7$ whose cathodes are re-spectively connected to the cathodes of the two di-odes $D_6$ and $D_7$ whose anodes are connected to the second terminal ($G_1$) of the output port of a first rec-tifier, the second terminal ($G_2$) of the output port of a second rectifier being connected to the cathodes of the switches $T_8$ and $T_9$ whose anodes are respec-tively connected to the anodes of the diodes $D_8$ and $D_9$ whose cathodes are connected to the first termi-nal ($P_2$) of a second rectifier, the inductor $L_1$ having a first terminal connected to the cathodes of $T_7$ and $D_7$ and a second terminal connected to the anodes of $T_8$ and $D_8$, the inductor $L_2$ having a first terminal connected to the cathodes of $T_6$ and $D_6$ and a sec-ond terminal connected to the anodes of $T_9$ and $D_9$, the output of the elementary converter being taken between the first terminal ($P_2$) of the output port of the second rectifier and the second terminal ($G_2$) of the output port of the first rectifier.

6. Device for supplying DC current according to either of Claims 1 and 2, **characterized in that**, m being equal to N/2, a rectifier having an output port comprising two terminals ($P_i$, $G_i$), an elementary DC/DC converter ($dc_{ij}$) comprises at least an assembly of four controlled switches $T_{10}$, $T_{11}$, $T_{12}$, $T_{13}$, of four diodes $D_{10}$, $D_{11}$, $D_{12}$, $D_{13}$ and of four inductors $L_3$, $L_4$, $L_5$, $L_6$, each controlled switch comprising an anode, a cathode and a control electrode, a first output terminal ($P_1$) of a first rectifier and a second output terminal ($G_2$) of a second rectifier being connected together and to the cathodes of the diodes $D_{10}$ and $D_{11}$ and also to the anodes of the diodes $D_{12}$ and $D_{13}$, the anodes of the diodes $D_{10}$ and $D_{11}$ being respectively connected to the anodes of the switches $T_{10}$ and $T_{11}$ whose cathodes are connected to a same second output terminal ($G_1$) of the first rectifier, the cathodes of the diodes $D_{12}$ and $D_{13}$ being respectively connected to the cathodes of the switches $T_{12}$ and $T_{13}$ whose anodes are connected to the first output terminal ($P_2$) of the second rectifier, the inductor $L_3$ having a first terminal connected to the anodes of $D_{10}$ and $T_{10}$ and the inductor $L_4$ having a first terminal connected to the anodes of $D_{11}$ and $T_{11}$, the second terminals of the inductors $L_3$ and $L_4$ being connected together and to a same terminal (G), the inductor $L_5$ having a first terminal connected to the cathodes of $D_{12}$ and $T_{12}$ and the inductor $L_6$ having a first terminal connected to the cathodes of $D_{13}$ and $T_{13}$, the second terminals of the inductors being connected together and to the output terminal of the converter.

FIG. 1A

FIG. 1B

EP 1 421 826 B1

FIG.2

FIG. 3

14

FIG. 4

FIG. 5

EP 1 421 826 B1

FIG. 6A

FIG. 6B

FIG. 7

FIG. 8

FIG. 9A

FIG. 9B